# EUROPEAN PATENT APPLICATION

(11) **EP 4 227 202 A1**
(43) Date of publication of application: **16.08.2023**
(21) Application number: 21877294.5
(22) Date of filing: 07.09.2021
(51) Int. Cl.: B63B 39/12, B63B 79/10

(54) **DRAFT INFORMATION GENERATING DEVICE AND DRAFT INFORMATION GENERATING METHOD**

(30) Priority: 07.10.2020 JP 2020169838
(71) Applicant: Furuno Electric Co., Ltd., Nishinomiya-City, Hyogo 662-8580 (JP)
(72) Inventor: BAJI, Hiroyuki, Nishinomiya-City, Hyogo 6628580 (JP)
(74) Representative: CSY London
(86) International application number: PCT/JP2021/032857
(87) International publication number: WO 2022/074991

(57) **Abstract**

The purpose of this invention is to easily calculate draft information with a simple configuration. The draft information generation device (10) comprises multiple range-finding sensors (20) and an information processor module (30). The range-finding sensor (20) is mounted on the side of a vessel (80) and measures the distance to water surface (91) using a range-finding signal. The information processor module (30) calculates draft height Hdr using the distance to the water surface (91) and the mold depth Hmd of the vessel (80).

## Description

The present invention relates to a draft information generation device and a draft information generating method for generating draft information of draft height and wave height.

A Japanese Patent Publication No. JPH06-293291A describes a draft measuring device for a ship. The draft measuring device is equipped with a plurality of ultrasonic transmitter-receiver elements arranged at the bottom of a water channel and a water level gauge. Ultrasound transmitted and received by multiple ultrasonic transmitter-receiver elements measures the distance from the bottom of the vessel to the bottom of the channel, and from this distance and the water level measured by the water level gauge, the draft value is calculated.

Another Japanese Patent Publication No. JP2014-196056A describes a draft measuring instrument. The draft measuring instrument has a water level detection sensor housed in a cylindrical member. The measurement of water level by the draft measuring instrument is carried out with the measuring instrument installed on the draft mark of the ship, etc. The draft value (draft height) is calculated from the measured water level and the value indicated by the draft mark.

### [Prior Art Documents]

### [Patent Documents]

Patent Document 1: Japanese Patent Publication No. JPH06-293291A
Patent Document 2: Japanese Patent Publication No. JP2014-196056A

### [Summary of the Invention]

### [Technical Problem(s) of Conventional Art]

However, the configuration of the Patent Document 1 for measuring draft height becomes large.

Since a measurer approaches the vessel to perform the measurement in the Patent Document 2, the measurer is necessary and the work involves a risk of danger.

An object of the present invention is to calculate draft information without any effort and without using a large scale configuration.

### [Solution to Problem(s)]

In accordance with an embodiment, a first aspect of the present invention relates to a draft information generation device. The draft information generation device, according to the present embodiment, is equipped with a plurality of range-finding sensors and an information processor module. The plurality of range-finding sensors are mounted on the side of a vessel to measure the distance to a water surface using range-finding signals. An information processor module calculates draft height based on the distance to the water surface.

According to this configuration, the draft height is calculated simply by measuring the distance to the water surface by the range-finding sensor mounted on the vessel without the need for a gauger.

### [Effect of the Invention]

According to this invention, the draft information can be easily calculated with a simple configuration.

### [Brief Description of the Drawing]

FIG. 1 is an example of an arrangement of range-finding sensors, according to an embodiment;
FIG. 2 is an enlarged view of the positioning of the range-finding sensors, according to an embodiment;
FIG. 3 is a functional block diagram showing an example of the configuration of a draft information generation device, according to an embodiment;
FIG. 4 is a functional block diagram showing an example of the configuration of the draft information generation device, according to an embodiment;
FIG. 5 is a graph showing distribution of distances based on signal strength, an example of selected data (distance), and an example of data for calculation (distance), according to an embodiment;
FIG. 6 is a flow chart showing an example of a draft information generation method, according to an embodiment;
FIG. 7 is a functional block diagram showing an example of the configuration of the draft information generation device according to a second embodiment, according to an embodiment; and
FIG. 8 is a functional block diagram showing an example of the configuration of the draft information generation device according to a third embodiment, according to an embodiment.

### [Detailed Description of the Invention]

(First Embodiment) Embodiments of the present invention will now be described with reference to the drawings.

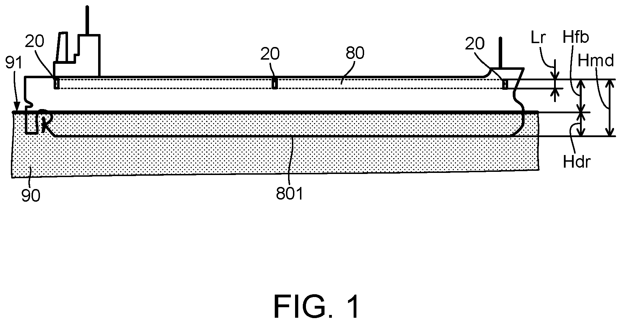

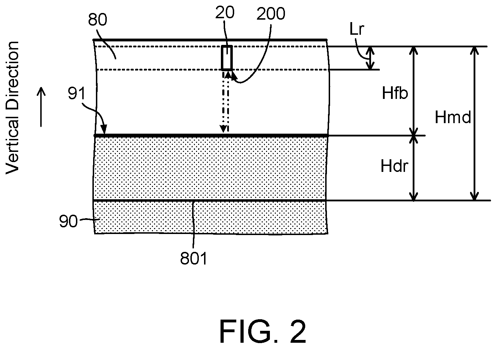

(Placement of Rang-Finding Sensors) FIG. 1 is an example of an arrangement of multiple range-finding sensors (20). FIG. 2 is an enlarged view of the positioning of the multiple range-finding sensors (20). As shown in FIG. 1, multiple range-finding sensors (20) are mounted on the hull of a vessel (80).

According to this arrangement, the multiple range-finding sensors (20) corresponds to a plurality of range-finding sensors. In one example, the multiple range-finding sensors (20) are mounted at a center of a bow and a stem of the vessel (80) and the longitudinal direction of the vessel (80) on the starboard side of the vessel (80). It can be noted that the longitudinal direction corresponds to direction connecting the bow and the stem.

According to the first embodiment, a bow position is a position near the bow, a stem position is a position near the stern, and a middle position is a position near the middle. Therefore, the multiple range-finding sensors (20) are arranged at different positions in the longitudinal direction of the vessel (80).

The location of the multiple range-finding sensors (20) is not limited to these locations. In addition, at least one range-finding sensor needs to be mounted on the vessel (80). When there is only one range-finding sensor, it is preferable to set the position where the draft height causes the change, for example, the position where the loads in the vessel (80) overlap in the longitudinal direction of the vessel (80).

As shown by double-dotted dashed arrows in FIG. 2, the multiple range-finding sensors (20) are mounted on the vessel (80) so that the transmitted range-finding signal can be reflected from water surface (91) and the reflected signal can be received. Furthermore, the multiple range-finding sensors (20) are arranged on the vessel (80) so that a transmission/reception surface (200) of the range-finding signal is perpendicular to the vertical direction. In an embodiment, when the vessel (80) is in still water, or without wobbling, the multiple range-finding sensors (20) are arranged so that the transmission/reception surface (200) is perpendicular to the vertical direction.

In an implementation, the multiple range-finding sensors (20) are installed near the deck in the vertical direction in other words, not in sea (water body) (90). In an ordinary implementation, the multiple range-finding sensors (20) are installed near the deck in the vertical direction not below the water surface (91). Furthermore, the multiple range-finding sensors (20) are preferably mounted to match reference position on an upper side of a freeboard (opposite to the water surface (91)) and the reference position on the upper side of a mold depth.

The multiple range-finding sensors (20) transmit a range-finding signal toward the water surface (91). The multiple range-finding sensors (20) receive the reflected range-finding signal at the water surface (91). For example, the range-finding signal is laser light. The range-finding signal may be of another type as long as it is highly linear and reflects at the water surface (91).

The multiple range-finding sensors (20) calculates the distance from the range-finding sensor to the water surface (91) from time difference between a time of transmission and a time of reception. More specifically, the multiple range-finding sensors (20) calculates the distance from a transmission/reception surface (200) of the multiple range-finding sensors (20) to the water surface (91). For example, the multiple range-finding sensors (20) calculates the difference between the transmission time and the reception time of the range-finding signal and multiplies the difference by 1/2 to calculate the distance.

The multiple range-finding sensors (20) perform ranging at multiple times. It can be noted that the multiple range-finding sensors (20) may perform range-finding only once, therefore it is preferable to perform range-finding at multiple times because of the processing, which is described later.

### (Configuration and Treatment of Draft Information Generator 10)

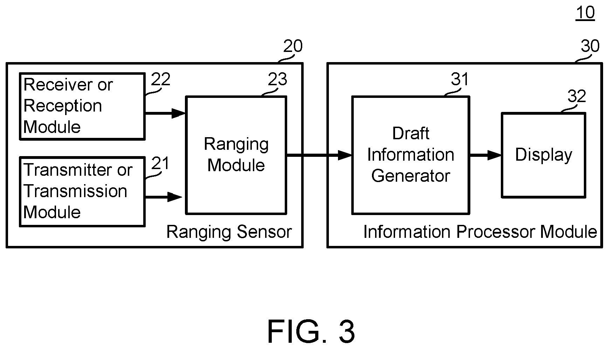

FIG. 3 is a functional block diagram showing an example of the configuration of a draft information generation device (10), according to the first embodiment. FIG. 3 shows the case of a single range-finding sensor.

As shown in FIG. 3, the draft information generation device (10) includes a range-finding sensor and an information processor module (30). The information processor module (30) is arranged on the deck of the vessel (80). The range-finding sensor and the information processor module (30) are connected by wired or wireless communication. When there are multiple range-finding sensors (20), each of the range-finding sensor is connected to the information processor module (30) by a prescribed communication format.

The range-finding sensor (20) includes a transmitter (21), a receiver (22), and a ranging module (23). The transmitter (21) generates and transmits the range-finding signal, as described above. The transmitter (21) may correspond to a transmission module. The transmitter (21) also outputs the transmission time to the ranging module (23). The receiver (22) receives the range-finding signal reflected by the water surface (91) and detects its signal level (amplitude). The receiver (22) outputs the signal level and reception time to the ranging module (23). The receiver (22) corresponds to a reception module.

The ranging module (23) calculates the distance from the difference between the transmission time and the reception time, as described above. The ranging module (23) outputs the distance to the information processor module (30). At this time, the ranging module (23) outputs the signal level associated with the distance.

The information processor module (30) includes a draft information generator (31) and a display (32). The draft information generator (31) can be realized by an arithmetic processing unit such as a personal computer or a dedicated electronic circuit. The draft information generator (31) generates draft information of the draft level from the statistical value of the distance and outputs it to the display (32).

The display (32) is realized by, for example, a liquid crystal display and displays draft information. The information processor module (30) may be provided with various notification interface and external output interface instead of the display (32). The notification interface is, for example, a voice notification such as a speaker, and the external output interface is, for example, an interface for information communication to the network. A notification interface or an external output interface may be provided along with the display (32). The display (32) and the notification interface may be separate from the information processor module (30).

### (Configuration and Treatment of Draft Information Generator 31)

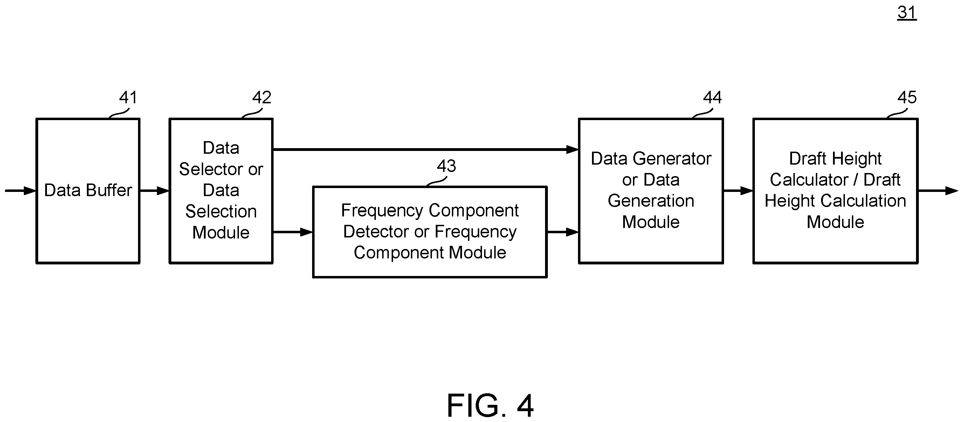

FIG. 4 is a functional block diagram showing an example of the configuration of the draft information generation device (10). As shown in FIG. 4, the draft information generator (31) includes a data buffer (41), a data selector (42), a frequency component detector (43), a data generator (44), and a draft height calculator (45).

Distance and signal level are input to the data buffer (41) from the range-finding sensor. The data buffer (41) stores distances and signal levels for multiple times. The data buffer (41) outputs the distance and signal level of multiple times over a predetermined time to the data selector (42).

The data selector (42) selects data by referring to the signal level. The data selector (42) corresponds to a data selection module. More specifically, data (distance) whose signal level falls within a predetermined range is selected and data (distance) that falls outside the predetermined range is excluded. The data selector (42) outputs the selection data (distance) to the frequency component detector (43) and the data generator (44). The frequency component detector (43) may correspond to a frequency component module.

It can be noted that the prescribed range is set by the range of signal levels effective for calculating the distance. In one example, the range is set to a range of signal levels obtained under the still water condition or when there is no wave between upper and lower limits of the measured range of draft height, calculated in advance, and given a predetermined margin. In another example, a reference range is set by the signal level under the still water condition when the draft height is at the upper end of the measurement range and the signal level under the still water condition when the draft height is at the lower end of the measurement range, and the range of the above signal level is set by having a predetermined margin for this reference range.

The frequency component detector (43) performs frequency analysis on a plurality of selected data (distances) arranged in a time series and detects a frequency component. By performing this processing, the frequency component detector (43) can detect the frequency of the wave for the multiple selected data (distances) arranged in time series. The frequency component detector 43 outputs the detected frequency to the data generator 44.

The data generator (44) may correspond to a data generation module. The data generator (44) generates data for calculating the draft height using the selection data (distance) arranged in time series and the frequency of the selection data (wave frequency) arranged in time series. More specifically, the data generator (44) interpolates time data (distance) not included in the selection data (distance) arranged in time series using the frequency component. This interpolation can be realized, for example, by using a nonlinear least squares method using frequencies. Therefore, the data for calculation of draft height (distance) consists of selection data (distance) arranged in time series and interpolated data for the time when these selection data do not exist. For example, the interpolated data includes data interpolated between adjacent selected data on the time axis.

The data generator (44) calculates the draft height from data (distance) for calculating the draft height. More specifically, the data generator (44) averages the calculation data (distance) for multiple hours to calculate a freeboard height Hfb. For example, in the examples of FIGS. 1 and 2, the upper end of the range-finding sensor coincides with the upper end of the freeboard height Hfb. Therefore, the data generator (44) calculates the freeboard height Hfb by adding the length Lr (length in the vertical direction) of the range-finding sensor to the average value of the calculation data (distance). If the transmission/reception surface (200) coincides with the reference point at the upper end of the freeboard height Hfb, the process of adding the length Lr of the range-finding sensor can be omitted.

Then, as shown in FIGS. 1 and 2, the draft height calculator (45) calculates draft height Hdr, which is the distance between the water surface (91) and the ship bottom (801) in the vertical direction, by subtracting the freeboard height Hfb from the previously stored mold depth Hmd. If the position of the upper end of the mold depth Hmd in the vertical direction is different from the position of the reference point of the upper end of the freeboard height Hfb, correction may be made to offset the difference.

The data generator (44) may calculate the freeboard height Hfb and the draft height Hdr at each time and calculate the draft height Hdr for multiple hours individually. In addition, the data generator (44) may average the draft height Hdr of the multiple hours to make the final draft height Hdr.

### (Effect of structure and treatment of draft information generation device 10)

With the above configuration, the draft information generation device (10) can calculate the draft height only by the distance measured by the range-finding sensors (20) mounted on the vessel (80). In other words, a measurer can measure the draft height without approaching the vessel (80).

Since the multiple range-finding sensors (20) are mounted on the vessel (80), the draft height can be calculated regardless of the location of the vessel (80). That is, it is not necessary to move the vessel (80) to calculate the draft height, and the draft height can be calculated on the spot when necessary.

Thus, the draft information generation device (10) can easily calculate draft information including draft height with a simple configuration.

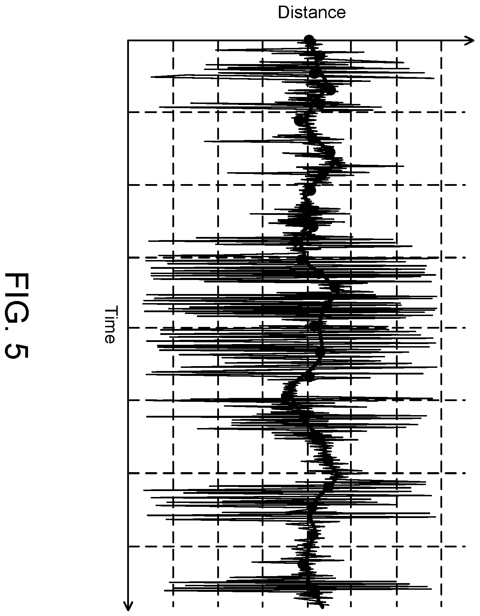

In addition, the draft information generation device (10) can calculate draft height with high precision for the following reasons. FIG. 5 is a graph showing the distribution of distances based on signal strength, an example of selected data (distance), and an example of data for calculation (distance).

The water surface (91) usually has various and sometimes irregular ruggedness instead of a uniform plane. In particular, when waves are present, the water surface (91) cannot be a uniform plane. For this reason, the reflection direction of the range-finding signal is not uniform and does not necessarily reflect in the direction perpendicular to the water surface (91).

Therefore, the signal levels of the received range-finding signals vary widely, and the distances calculated using this signal strength also vary widely.

However, by using the configuration of the draft information generation device (10), as described above, the received signal (received range-finding signal) used for the data for calculating the draft height is selected with reference to the signal level so as to suppress the effect of the above variation (see the black circle mark in FIG. 5). This improves the accuracy of the calculation of draft height.

Furthermore, by using the configuration of the draft information generation device (10) described above, the data (distance) at the time when there is no data on the time axis is interpolated by selecting the data (distance). The draft height is then calculated from the interpolated data. This improves the accuracy of calculating draft height.

Moreover, the interpolation is done by the frequency of the wave. Thus, the data for calculating the draft height includes the frequency component of the wave, as shown by the thick solid line in FIG. 5. Therefore, the calculated draft height more accurately reflects the wave condition, and the calculation accuracy of the draft height is further improved. That is, the draft information generation device (10) can calculate draft height with higher accuracy.

Moreover, by performing interpolation using such wave frequencies, the draft information generator (31) can calculate not only the draft height but also the wave height and the time change of the wave height as a kind of draft information. Then, by performing interpolation using the wave frequency, the draft information generator (31) can calculate the wave height and the change in the wave height over time with high precision.

### (Draft Information Generation Method)

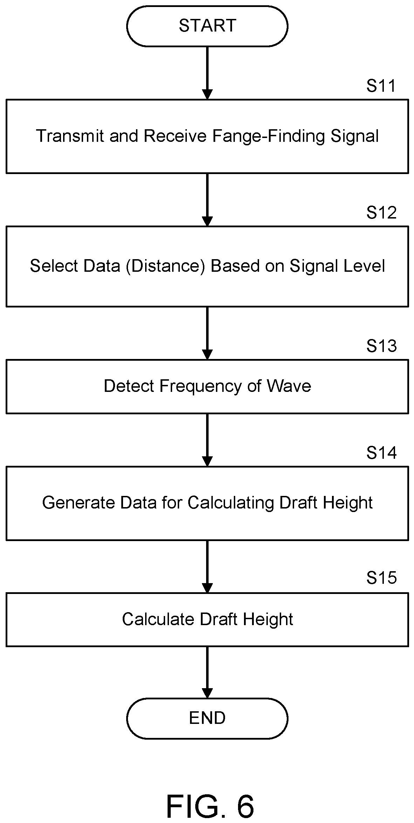

FIG. 6 is a flow chart showing an example of the draft information generation method. For example, the draft information generation method can be realized by programming the draft information generation method, shown in FIG. 6, storing it in a storage medium or the like, and executing this program by an arithmetic processing device such as a CPU. The specific details of each treatment are described in the description of the draft information generation device (10) described above, and descriptions are omitted except where additions are necessary.

The draft information generation device (10) transmits and receives the range-finding signal, at step (S11) and calculates data (distance). The draft information generation device (10) selects data (distance) based on the signal level, at step (S12). The draft information generation device (10) detects the frequency of the wave from the selected data (distance), at step (S13).

Using the selected data (distance) and wave frequency, the draft information generation device (10) interpolates the data (distance) to generate data for calculating the draft height, at step (S14).

The draft information generation device (10) calculates the draft height using the data for calculating the draft height, at step (S15).

By using such a draft information generation method, the draft information generation device (10) can easily calculate draft information including draft height with a simple configuration.

### (Second Embodiment)

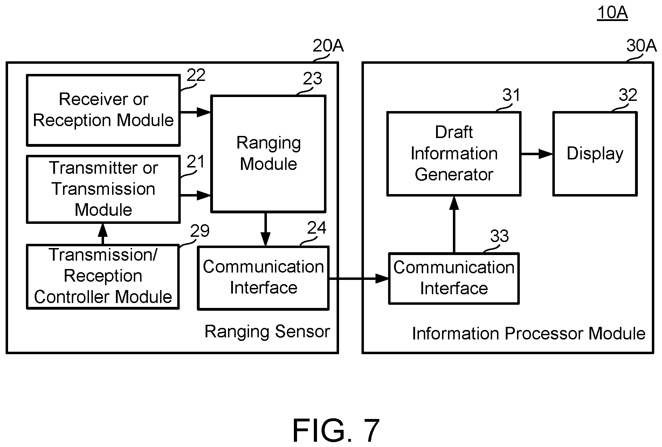

A draft information generation technique according to a second embodiment of the present invention will be described with reference to the figures. FIG. 7 is a functional block diagram showing an example of the configuration of the draft information generation device according to the second embodiment. FIG. 7 shows the case of a single range-finding sensor.

As shown in FIG. 7, a draft information generation device (10A) according to the second embodiment differs from the draft information generation device (10) according to the first embodiment in that a more specific configuration for communication and a transmission/reception controller module (29) for range-finding signals are added. The other configuration of the draft information generation device 10A is the same as that of the draft information generation device (10), and each description of the similar modules is omitted.

The draft information generation device (10A) is equipped with a range-finding sensor (20A) and an information processor module (30A).

The range-finding sensor (20A) includes the transmitter (21), the receiver (22), the ranging module (23), the communication interface (24), and the transmission/reception controller module (29). The transmission/reception controller module (29) controls the transmission time of the range-finding signal in the transmitter (21). The communication interface (24) converts the data (distance) and signal level calculated by the ranging module (23) into communication data of a prescribed system and transmits the data.

An information processor module (30A) includes the draft information generator (31), the display (32), and the communication interface (33). The communication interface (33) receives the communication data from the communication interface (24), demodulates the data (distance) and signal level, and outputs them to the draft information generator (31).

With such a configuration, for example, the draft information generation device (10A) can control the timing of ranging for calculating the draft height in more detail by providing the transmission/reception controller module (29).

Also, by providing the communication interface (24) and the communication interface (33), the format that can be adopted for data communication between the range-finding sensor (20A) and the information processor module (30A) can be increased.

### (Third Embodiment)

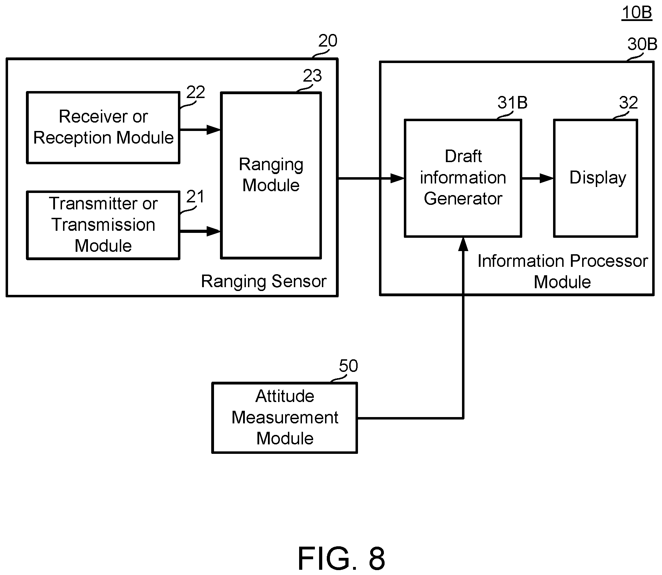

A draft information generation technique according to a third embodiment of the present invention will be described with reference to the figures. FIG. 8 is a functional block diagram showing an example of the configuration of a draft information generation device (10B), according to the third embodiment. FIG. 8 shows the case of a single range-finding sensor.

As shown in FIG. 8, the draft information generation device (10B) according to the third embodiment differs from the draft information generation device (10) according to the first embodiment in the point of having an altitude measurement module (50) and in the treatment of a draft information generator (31B). The other configuration of the draft information generation device (10B) is the same as that of the draft information generation device (10), and each description of the similar modules is omitted.

The draft information generation device (10B) is equipped with the range-finding sensor, an information processor module (30B), and the altitude measurement module (50). The information processor module (30B) includes the draft information generator (31B) and the display (32).

The altitude measurement module (50) measures the altitude of the vessel (80). The altitude measurement module (50) can be realized by, for example, an inertial sensor or a sensor using a positioning signal such as a GPS signal. The altitude measurement module 50 outputs the measured altitude to a draft information generation device module (31B).

The draft information generator (31B) corrects the data (distance) from the range-finding sensor (20) according to the altitude. For example, the draft information generator (31B) calculates, from the altitude, the angle between the direction perpendicular to the transmission/reception surface (200) of the range-finding sensor (20) and the water surface (91). The draft information generator (31B) stores the distance error due to this angle in advance, and corrects the data (distance) to cancel the distance error. Thus, the draft information generator (31B) can suppress the effect of the altitude of the vessel (80) and calculate the draft height with higher accuracy.

When selecting the data (distance), the draft information generator (31B) may correct the signal level according to the altitude and select the data (distance) using the corrected signal level. For example, the draft information generator (31B) calculates, from the altitude, the angle between the direction perpendicular to the transmission/reception surface (200) of the range-finding sensor and the water surface (91). The draft information generator (31B) stores the error of the signal level due to this angle in advance, and corrects the signal level to cancel the error of the signal level. Then, the draft information generator (31) uses the corrected signal level to select data (distance). Thus, the draft information generator (31B) can suppress the effect of the altitude of the vessel (80) and calculate the draft height with higher accuracy.

In the above explanation, the case of 1 range-finding sensor is mainly shown. However, when multiple range-finding sensors (20) are used, the draft information generation device (10) may calculate the draft height for each range-finding sensor 20, or the draft height may be calculated from the average value of the distances calculated by the multiple range-finding sensors (20). When the draft height is calculated for each range-finding sensor, the draft information generation device (10) can calculate the draft height according to the position of the vessel 80. When the average of the distances of multiple range-finding sensors (20) is used, the draft information generation device (10) can calculate the draft height with a smaller error as the vessel (80).

In the above explanation, the draft information generation device (10) showed a mode for calculating draft height at a certain time. However, by continuously calculating this draft height, the draft information generation device can also calculate the amount of change in draft height, etc.

In the above explanation, the draft information generation device (10) performs ranging for calculating the draft height at the time set by the device itself. However, for example, the information processor module may be equipped with an operation input interface, and when the operation input interface is operated to start calculation of draft height, the range-finding sensor may be controlled to perform ranging. A separate operation input interface (operation input device) may be provided to control the ranging of the range-finding sensor from the operation input interface.

In addition, in the above explanation, the draft information generation device (10) detects the frequency component and performed interpolation according to the frequency. However, the draft information generation device (10) may store in advance a state estimation model for proper interpolation and use this state estimation model to perform interpolation. For example, as a condition estimation model, a model based on the frequency of frequently occurring waves at the position where the vessel (80) measures draft height, a model based on weather information when the draft height is measured, etc., can be used. Linear interpolation is also available, but the draft height can be calculated more accurately by performing nonlinear interpolation.

Embodiments of the present invention may be modified in various ways within the scope of the claims.

### [List of Reference Numerals]

10, 10A, 10B: Draft Information Generator Device
20: Multiple Range-Finding Sensors
20A: Range-Finding Sensor
21: Transmitter or Transmission Module
22: Receiver or Reception Module
23: Ranging Module
24: Communication Interface
29: Transmission/Reception Controller Module
30, 30A, 30B: Information Processor Module
31: Draft Information Generator
31B: Draft information Generator
32: Display
33: Communication Interface
41: Data Buffer
42: Data Selector or Data Selection Module
43: Frequency Component Detector or Frequency Component Module
44: Data Generator or Data Generation Module
45: Draft Height Calculator or Draft Height Calculation Module
50: Altitude Measurement Module
80: Vessel (Ship)
90: Sea (Water Body)
91: Water Surface
200: Transmission/Reception Surface
801: Ship Bottom (Bottom Shell Plate)
S11: Transmit and Receive Range-Finding Signal
S12: Select Data (Distance) Based on Signal Level
S13: Detect Frequency of Wave
S14: Generate Data for Calculating Draft Height
S 15: Calculate Draft Height

## Claims

1. A draft information generation device (10), comprising:
a range-finding sensor (20) to be mounted on a side of a vessel (80) configured to measure a distance to a water surface (91) by transmitting a range-finding signal; and
an information processor module configured to calculate a draft height based on the distance to the water surface (91).

2. The draft information generation device (10) according to claim 1, further comprising:
a plurality of the range-finding sensors (20); wherein:
the plurality of range-finding sensors (20) are mounted at different positions on the vessel (80).

3. The draft information generation device (10) according to claim 2, wherein the different positions of the vessel (80) include a bow of the vessel (80), a stern of the vessel (80), and a longitudinal middle of the vessel (80).

4. The draft information generation device (10) according to claims 1 to 3, wherein the plurality of range-finding sensors (20) are configured to measure the distance at multiple times and the information processor module is configured to calculate the draft height using a statistical value of the distance measured at the multiple times.

5. The draft information generation device (10) according to claim 4, wherein the information processor module is further comprising:
a data selector (42) configured to select the distance measured at the multiple times based on the intensity of the range-finding signal; and
a data generator (44) configured to execute a prescribed interpolation processing for the selected distance to generate data for calculation of the draft height consisting of distances arranged in time series.

6. The draft information generation device (10) according to claim 5, wherein the information processor module is further comprising:
a frequency component detector (43) configured to detect a frequency component of the distance measured at the multiple times; and
the data generator (44) is configured to execute the interpolation processing using the frequency components.

7. A draft information generation method, comprising:
measuring a distance to a water surface (91) from a predetermined position above the water surface (91) of a hull by using a range-finding signal; and
calculating a draft height based on the distance to the water surface (91).

8. The draft information generation method according to claim 7, further comprising:
measuring the distance at different positions on the vessel (80).

9. The draft information generation method according to claim 8, wherein the different positions of the vessel include:
a bow of the vessel (80), a stem of the vessel (80), and a longitudinal middle of the vessel (80).

10. The draft information generation method according to any of claims 7 to 9, further comprising:
measuring the distance at multiple times; and
calculating the draft height using a statistical value of the distance measured at the multiple times.

11. The draft information generation method according to claim 10, further comprising:
selecting the distance measured at the multiple times based on the intensity of the range-finding signal; and
executing a prescribed interpolation processing for the selected distance to generate data for calculation of the draft height consisting of distances arranged in time series.

12. The draft information generation method according to claim 11, further comprising:
detecting a frequency component of the distance measured at the above multiple times; and
executing the interpolation processing using the frequency components.
